# EUROPEAN PATENT APPLICATION

(11) **EP 2 346 262 A2**
(43) Date of publication of application: **20.07.2011**
(21) Application number: 10191194.9
(22) Date of filing: 15.11.2010
(51) Int. Cl.: H04N 13/00

(54) **Method and apparatus for setting stereoscopic effect in a portable terminal**

(30) Priority: 19.11.2009 KR 20090111975
(71) Applicant: Samsung Electronics Co., Ltd., Suwon-si, Gyeonggi-do (KR)
(72) Inventor: Lee, Chang-Su, Gyeonggi-do, Suwon-si (KR)
(74) Representative: van Westenbrugge, Andries

(57) **Abstract**

A method and an apparatus for setting a three-Dimensional (3D) effect in a portable terminal are provided. In the method, a 3D effect index for each of a plurality of items forming a display screen or a list is set. A display depth of each item according to the set 3D effect index is controlled when the plurality of items are displayed.

## Description

### BACKGROUND OF THE INVENTION

### 1. Field of the Invention:

The present invention relates to a method and an apparatus for setting a stereoscopic effect in a portable terminal. More particularly, the present invention relates to a method and an apparatus for applying a three-Dimensional (3D) effect to an item displayed on a screen in a portable terminal that supports a 3D display.

### 2. Description of the Related Art:

As users continue to expect that more and more advanced services and features will be provided on portable terminals, service providers and portable terminal manufacturers are putting great effort into studying and developing such advanced services and features. For example, advanced functions for more efficiently providing character and image information to a user through a display unit in a portable terminal are being studied and developed.

More particularly, as the field of computer graphics has extended rapidly based on ongoing research and development, techniques for displaying information in a 3D manner are now available. However, a conventional technique for displaying 3D information applies a uniform 3D effect to relevant items so that a user may merely feel an overall sense of 3D. That is, the conventional method does not selectively apply a 3D effect such that more relevant items are more easily recognized by the user. Accordingly, such a technique is limited in providing an enhanced display to the user.

### SUMMARY OF THE INVENTION

An aspect of the present invention is to address at least the above-mentioned problems and/or disadvantages and to provide at least the advantages described below. Accordingly, an aspect of the present invention is to provide a method and an apparatus for setting a 3D effect in a portable terminal.

Another aspect of the present invention is to provide a method and an apparatus for applying a 3D effect for each display item according to a user's setting in a portable terminal that supports a 3D display.

Still another aspect of the present invention is to provide a method and an apparatus for applying a 3D effect for each display item according to a use frequency of the item in a portable terminal that supports a 3D display.

In accordance with an aspect of the present invention, a method for setting a three-Dimensional (3D) effect in a portable terminal is provided. The method includes setting a 3D effect index for each of a plurality of items forming a display screen or a list, and controlling a display depth of each item according to the set 3D effect index when displaying the items.

In accordance with another aspect of the present invention, an apparatus for setting a 3D effect in a portable terminal is provided. The apparatus includes a controller for setting a 3D effect index for each of a plurality of items forming a display screen or a list, and a display unit for controlling a display depth of each item according to the set 3D effect index when displaying the items.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings in which:

FIG. 1 is a block diagram illustrating a portable terminal according to an exemplary embodiment of the present invention;

FIG. 2 is a flowchart illustrating a procedure for setting and applying a 3D effect index for an item according to a user's setting in a portable terminal according to an exemplary embodiment of the present invention;

FIG. 3 is a view illustrating a screen construction to which a 3D effect is applied for an item in a portable terminal according to an exemplary embodiment of the present invention; and

FIG. 4 is a view illustrating a procedure for setting and applying a 3D effect index for an item with consideration of a user's preference in a portable terminal according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide a method and an apparatus for setting a 3D effect index for each item that may be displayed according to either a user's setting or a use frequency in a portable terminal that supports a 3D display, and differently applying a 3D effect for each item according to a 3D effect index when displaying a screen.

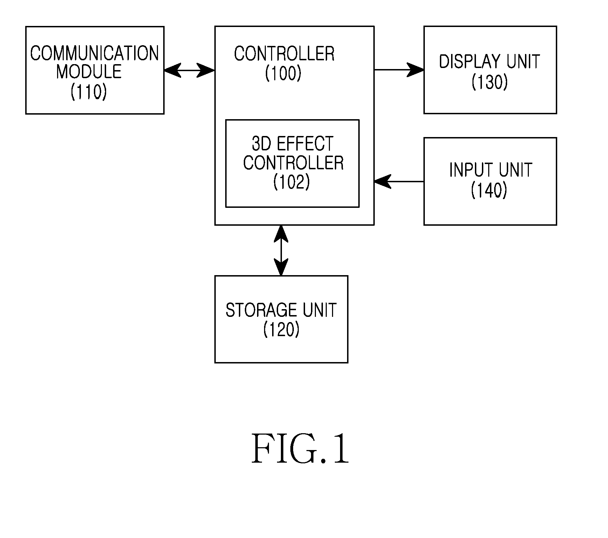

FIG. 1 is a block diagram illustrating a portable terminal according to an exemplary embodiment of the present invention.

Referring to FIG. 1, the portable terminal includes a controller 100, a communication module 110, a storage unit 120, a display unit 130, and an input unit 140. The controller 100 further includes a 3D effect controller 102.

The controller 100 performs and controls processes for operation of the portable terminal. According to an exemplary embodiment of the present invention, the controller 100 includes the 3D effect controller 102 to control and process functions for setting a 3D effect index for items (for example, a menu item, a phone number, a schedule, and a memo) that form a screen or a list. The 3D effect controller 102 also controls and processes functions for displaying a different 3D effect for each item according to the 3D effect index when displaying the item on a screen of the display unit 130. In an exemplary implementation, the 3D effect index denotes a degree of a display depth for representing a 3D effect of a relevant item. In addition, the controller 100 may determine a 3D effect index according to the frequency of use of each item, and controls and processes functions for displaying a different 3D effect for each item according to the 3D effect index. Here, the use frequency may represent a frequency at which a user accesses a relevant item or uses a relevant item during a certain time period. In an exemplary implementation, the controller 100 determines that a user prefers corresponding information or a corresponding item when a use frequency of information or item is high and determines that a corresponding 3D effect index for the information or item is high. The controller 100 may determine a 3D effect index according to a use frequency using a mapping table or a function stored in the storage unit 120.

The communication module 110 processes a signal transmitted/received via an antenna under control of the controller 100.

The storage unit 120 stores various programs and data for operation of the portable terminal, and more particularly, stores a 3D effect index for various items displayed on the screen according to an exemplary embodiment of the present invention. In addition, the storage unit 120 may store a mapping table or a function for determining a relation between a use frequency of various items and a 3D effect index. In an exemplary implementation, the mapping table or the function may represent a relation in which the 3D effect index for an item is increased with a corresponding increase in the use frequency of the item.

The display unit 130 displays status information, numbers, characters, a large amount of moving images, and still images occurring during an operation of the portable terminal. More particularly, the display unit 130 differently displays a depth of relevant information or item according to a 3D effect index set for the information or item under control of the controller 100.

The input unit 140 includes a plurality of function keys, numerical keys and character keys, or a touch sensor to provide input data, corresponding to a key pressed by a user or a user's touch, to the controller 100. According to an exemplary embodiment of the present invention, the input unit 140 may receive a 3D effect index of various items (e.g., a menu item, a phone number, a schedule, and a memo) from a user to provide the same to the controller 100. In addition, the input unit 140 provides information represented by a key or a touch input by the user to the controller 100.

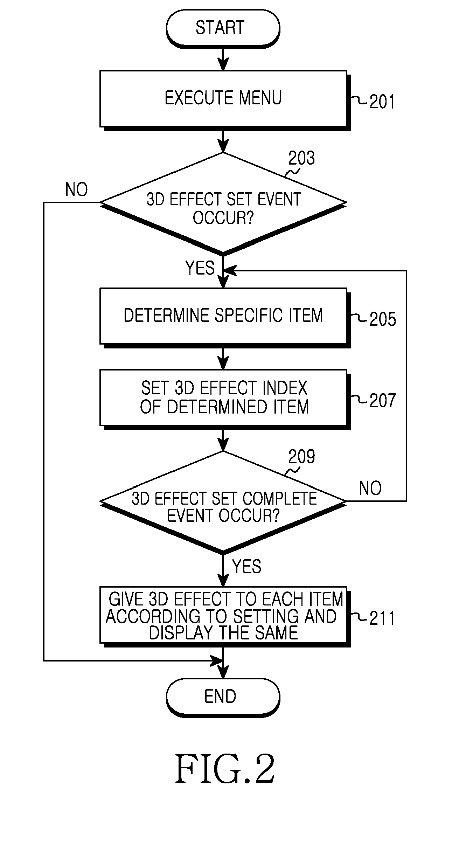

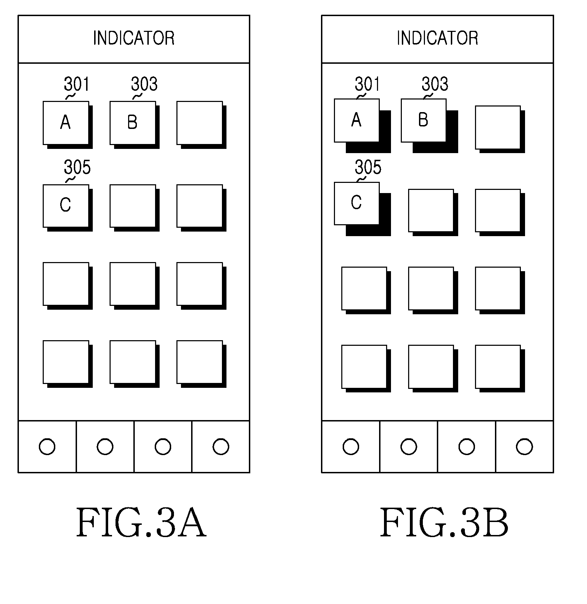

FIG. 2 is a flowchart illustrating a procedure for setting and applying a 3D effect index for an item according to a user's setting in a portable terminal according to an exemplary embodiment of the present invention. FIG. 3 is a view illustrating a screen construction to which a 3D effect is applied for an item in a portable terminal according to an exemplary embodiment of the present invention.

Referring to FIG. 2, the portable terminal executes a menu that displays relevant items on a screen in step 201. Here, the menu may be a main menu or may be a sub menu for a specific function. For example, the menu may be a main menu including items such as '1. phone book', '2. messages', '3. schedule', and '4. memo', or may be a sub menu including items of a specific function. As an example, the sub menu may include items of a phone book function such as '1. phone number search', '2. new number registration', '3. shortcut number management', and '4. communication list'.

The portable terminal determines whether a 3D effect set event occurs in step 203. Here, the 3D effect set event may occur through a specific key input or menu selection. If it is determined in step 203 that the 3D effect set event does not occur, the portable terminal ends the algorithm according to the present invention.

In contrast, if it is determined in step 203 that the 3D effect set event occurs, the portable terminal determines a specific item from items displayed on the screen according to a user's key manipulation or touch operation in step 205. In step 207, the portable terminal displays a 3D effect index setting window in order to set a 3D effect index for the determined specific item under control of the user. In an exemplary implementation, the 3D effect index represents a degree of a display depth for representing a 3D effect for a relevant item. The 3D effect index may be set using a specific value or a specific step. For example, the 3D effect index may be set to a value between 0 and 100, or set to a step such as 'low', 'medium', or 'high'.

In step 209, the portable terminal determines whether an event indicating that the 3D effect setting is completed occurs. If it is determined in step 209 that the event indicating completion of the 3D effect setting does not occur, the portable terminal returns to step 205 to re-perform subsequent steps.

In contrast, if it is determined in step 209 that the event indicating completion of the 3D effect setting occurs, the portable terminal associates a 3D effect for each specific item and displays the same on the screen in step 211. For example, referring to FIG. 3, as illustrated in frame (A), when 3D effect indexes of items A 301, B 303, and C 305 are set to high values or high steps, the depths of items A 301, B 303, and C 305 may be displayed deeper as compared to other items as illustrated in frame (B). At this point, items to which the 3D effect indexes have not been set by the user may be set to a default value of the 3D effect index. Here, the default values may be minimum values or minimum steps.

After that, the portable terminal ends the algorithm according to an exemplary embodiment of the present invention.

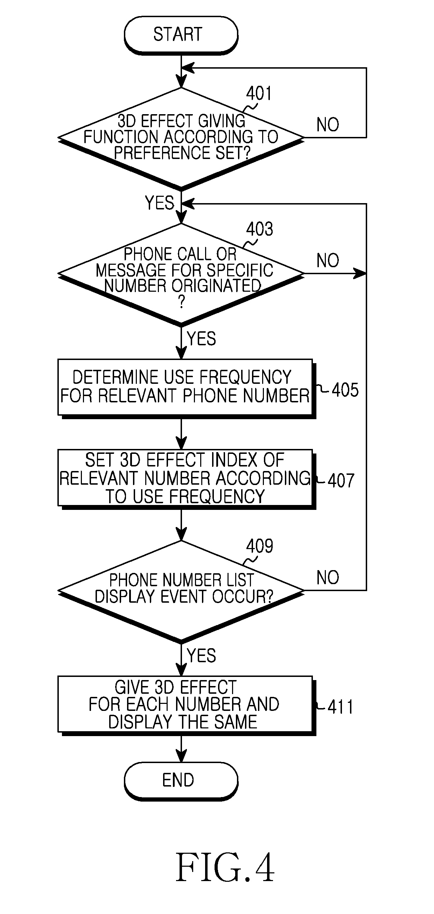

FIG. 4 is a view illustrating a procedure for setting and applying a 3D effect index for an item with consideration of a user's preference in a portable terminal according to an exemplary embodiment of the present invention.

Referring to FIG. 4, the portable terminal determines whether a 3D effect setting function based on preference is set in step 401.

If it is determined in step 401 that the 3D effect setting function based on preference is set, the portable terminal determines whether a phone call or a message for a specific phone number is originated in step 403.

If it is determined in step 403 that the phone call or the message for the specific phone number is originated, the portable terminal determines a use frequency for the relevant phone number in step 405, and sets a 3D effect index of the relevant phone number according to the use frequency in step 407. In an exemplary implementation, the portable terminal may set the 3D effect index of the relevant phone number to high when a use frequency of the relevant phone number is high. At this point, the portable terminal may determine the 3D effect index according to the use frequency of the phone number using a mapping table or a function stored in the storage unit 120. Here, the mapping table may be configured such that a 3D effect index is set high when a use frequency is high.

In step 409, the portable terminal determines whether an event for displaying a phone number list according to a user manipulation occurs. If it is determined in step 409 that the event for displaying the phone number does not occur, the portable terminal returns to step 403 to re-perform subsequent steps.

In contrast, if it is determined in step 409 that the event for displaying the phone number list does occur, the portable terminal gives a 3D effect to each phone number according to a 3D effect index set for each phone number and displays the same in step 411. Here, phone numbers not used by the user may be set to default values of the 3D effect index. At this point, the default values may be minimum values or minimum steps.

After that, the portable terminal ends the algorithm according to an exemplary embodiment of the present invention. It is to be understood that, although the example illustrated in FIG. 4 was based on phone calls and messages associated with a specific phone number, the invention is not so limited. For example, the method of FIG. 4 may be applied to determine a use frequency of any application or function provided by the portable terminal such that an icon associated with a frequently used application or function has a different 3D effect as compared with less frequently used applications or functions.

According to an exemplary embodiment of the present invention, a user may intuitively know or recognize a menu item or information desired or frequently used by viewing a 3D effect that depends on a set 3D effect index when setting the 3D effect index for each display item according to user setting and a use frequency and displaying the same on a screen in a portable terminal that supports a 3D display.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for setting a three-Dimensional (3D) effect in a portable terminal, the method comprising:
setting a 3D effect index for each of a plurality of items; and
controlling a display depth of each item according to the set 3D effect index when displaying the items.

2. The method of claim 1, wherein the plurality of items comprise items forming at least one of a screen and a list.

3. The method of claim 1, wherein each of the plurality of items comprises at least one of a menu item, a phone number, a schedule, and a memo.

4. The method of claim 1, wherein the setting of the 3D effect index comprises:
selecting one of the plurality of items; and
receiving a 3D effect index for the selected item from a user.

5. The method of claim 1, wherein the setting of the 3D effect index comprises:
determining a use frequency of each of the plurality of items; and
setting the 3D effect index for each of the plurality of items according to the use frequency of the item.

6. The method of claim 5, wherein the setting of the 3D effect index comprises setting the 3D effect index using at least one of a mapping table and a function representing a relation between the use frequency and the 3D effect index.

7. An apparatus for setting a three-Dimensional (3D) effect in a portable terminal, the apparatus comprising:
a controller for setting a 3D effect index for each of a plurality of items; and
a display unit for controlling a display depth of each item according to the set 3D effect index when displaying the items.

8. The apparatus of claim 7, wherein the plurality of items comprise items forming at least one of a screen and a list.

9. The apparatus of claim 7, wherein each of the plurality of items comprises at least one of a menu item, a phone number, a schedule, and a memo.

10. The apparatus of claim 7, further comprising an input unit for selecting one of the plurality of items and for receiving a 3D effect index for the selected item from a user.

11. The apparatus of claim 7, wherein the controller determines a use frequency of each of the plurality of items, and sets the 3D effect index for each of the plurality of items according to the use frequency of the item.

12. The apparatus of claim 11, wherein the controller sets the 3D effect index using at least one of a mapping table and a function representing a relation between the use frequency and the 3D effect index.

13. The method of claim 4, 5 and the apparatus of claim 10, 11, respectively, and
the method further comprising setting a 3D index for an item that is not selected to a default value, and
the apparatus is wherein the controller sets a 3D index for an item other than one of the plurality of items to a default value.

14. The method and apparatus of claim 13, wherein the default value comprises one of a specific value and a step value.
